Europäisches Patentamt

European Patent Office

Office européen des brevets

(11) Veröffentlichungsnummer: **0 472 092 A1**

(12) **EUROPÄISCHE PATENTANMELDUNG**

(21) Anmeldenummer: **91113555.6**

(22) Anmeldetag: **13.08.91**

(51) Int. Cl.⁵: **F01C 21/08**, F02B 55/02

(30) Priorität: **17.08.90 US 569102**

(43) Veröffentlichungstag der Anmeldung:
**26.02.92 Bulletin 92/09**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Jones, Charles**
**208 Forest Drive**
**Hillsdale, New Jersey 07642(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

(54) **Rotor für Drehkolbenmotoren**

(57) Ein Rotor (18) für einen Drehkolbenmotor (10) weist mehrere auf dem Umfang verteilte und zueinander beabstandete Scheitelbereiche (30) auf. Zwischen den Scheitelbereichen (30) liegen Arbeitsflächen (44), wobei jede Arbeitsfläche (44) eine Ausnehmung (46) aufweist, die durch eine Isolierplatte (80) abgedeckt ist. Um thermische Ausgleichsbewegungen aufnehmen zu können, wird die Isolierplatte (80) mit einem im wesentlichen gleichförmigen rechteckigen Querschnitt mit ihrem einen ersten Ende (82) fest mit dem Rotor (18) verbunden, während ein zweites Ende (83) der Isolierplatte (80) gleitbar von einem Schlitz (76) aufgenommen wird.

Fig. 1

EP 0 472 092 A1

Die Erfindung betrifft einen Rotor für einen Drehkolbenmotor mit mehreren auf dem Umfang verteilten und zueinander beabstandeten Scheitelbereichen und mit mehreren zwischen den Scheitelbereichen liegenden Arbeitsflächen, wobei jede Arbeitsfläche eine Ausnehmung aufweist, die durch eine Isolierplatte abgedeckt ist.

Die Erfindung findet Anwendung bei Drehkolbenverbrennungskraftmaschinen, wie sie durch die US-A-2,988,065 offenbart wurden, und insbesondere bei Drehkolbenmaschinen mit Schichtladung, wie sie z. B. aus der US-A-3,246,636 und der US-A-3,894,518 hervorgehen.

Insbesondere bei Maschinen mit Schichtladung prallt der aus der Hochdruckdüse austretende Kraftstoff auf die Oberfläche des Maschinenrotors auf. Zu kalte Rotorarbeitsflächen führen sowohl zu dicken Kohlenstoffablagerungen auf der Rotoroberfläche als auch zu einem deutlichen Ansteigen des Qualms und der Menge der Kohlenwasserstoffe in dem Maschinenauspuff. Dies trifft insbesondere dort zu, wo der Rotor durch ein Kühlmedium, beispielsweise Öl, gekühlt wird (US-A-3,176,915).

Zur Lösung dieses Problems wurden verschiedene Konstruktionen vorgeschlagen. Beispielsweise beschreibt die US-A-3,359,956 einen Drehkolbenmotor mit Schichtladung, bei dem die Arbeitsflächen des Rotors mit einem Überzug geringer thermischer Leitfähigkeit versehen sind, um die Temperatur auf der Rotoroberfläche zu steigern. Hierdurch sollen die vorgenannte Kohlenstoffbelastung, die sich auf dem Rotor ausbildet sowie der Qualm und die Kohlenwasserstoffe im Maschinenauspuffgas vermindert werden. Bei dieser Lösung ist es jedoch nachteilig, daß die Rotorbeschichtung besonders dann zum Abblättern oder Abplatzen neigt, wenn relativ dicke Schichten auf den Rotor aufgebracht sind, um eine Beschichtung mit deutlichen Isoliereigenschaften zu erhalten. Dieses Abplatzen hat wahrscheinlich seine Ursache im Wärmestoß, der durch die Temperaturdifferenzen zwischen der inneren und äußeren Oberfläche der Beschichtung während des Maschinenbetriebes auftritt.

Durch die US-A-3,995,602 ist der Rotor eines Drehkolbenmotors bekannt geworden, bei dem an der Arbeitsfläche des Rotors Isolierplatten befestigt sind. Diese Platten müssen jedoch mit ihrer gesamten umlaufenden Kante mit dem Rotor verschweißt werden. Die Platten neigen dazu, sich bei Temperaturänderungen zu verbiegen.

Die US-A-4,067,670 offenbart einen Drehkolbenmotor, bei dem jede Arbeitsfläche des Rotors mit einem Einsatz versehen ist. Jeder Einsatz besteht jedoch aus einer Vielzahl von einzelnen Abdeckteilen, die jede mit dem Rotor über eine separate Schraube oder ein separates Niet verbunden sind, was fertigungstechnisch sehr aufwendig ist.

Aus der US-A-4,080,934 geht ein Drehkolbenmotor mit Schichtladung hervor, bei dem die Arbeitsflächen des Rotors mit Einsätzen versehen sind, die zum Rotor beabstandet und thermisch isoliert angeordnet sind. Die offenbarte Konstruktion ist jedoch kompliziert und teuer ausgeführt. Um Wärmeausdehnungen des Einsatzes abzufangen, ist die Verwendung von komplexen flexiblen Schraubenbefestigungen erforderlich.

Die der Erfindung zugrunde liegende Aufgabe wird darin gesehen, die genannten Probleme zu überwinden und einen Rotor der eingangs genannten Art anzugeben, der eine verbesserte Anordnung von Isolierplatten oder Einsätzen aufweist. Insbesondere soll die Rotorkonfiguration Einsätze beziehungsweise Abdeckungen mit isolierenden Luftzwischenräumen zwischen den Einsätzen und dem Rotorkörper aufweisen. Ferner soll jeder Einsatz durch den Rotor so getragen werden, daß thermische Ausgleichsbewegungen zwischen den Einsätzen und dem Rotorkörper möglich sind.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Jede Arbeitsfläche des Rotors enthält eine taschenförmige Ausnehmung, die durch eine Isolierplatte abgedeckt ist. An einem ersten Ende jeder Ausnehmung befindet sich ein stufenförmiger Absatz, auf dem ein erstes Ende der Isolierplatte aufliegt und dauerhaft, beispielsweise durch eine Schweißverbindung befestigt ist. Das zweite, gegenüberliegende Ende der Isolierplatte ist in einen in die Ausnehmung mündenden Schlitz, der in den Rotorkörper eingearbeitet ist und sich in etwa parallel zur Rotoroberfläche erstreckt, eingesteckt und kann sich im Schlitz bewegen, um thermische Ausdehnungen oder Schrumpfungen der Isolierplatte ausgleichen zu können. Die Seitenbereiche der Isolierplatte liegen vorzugsweise ebenfalls auf stufenförmigen Absätzen auf, sind jedoch zumindest nicht vollständig mit dem Rotorkörper dauerhaft verbunden.

Die Isolierplatte ist so über der Ausnehmung angeordnet, daß sich zwischen der Isolierplatte und der Bodenfläche der Ausnehmung ein Luftzwischenraum oder eine Isolierkammer ausbildet, die einen Wärmeübergang zwischen Rotorkörper und Isolierplatte erschwert. Eine kleine Druckausgleichsöffnung in der Isolierkammer sorgt für einen Druckausgleich und verhindert eine Druckänderung in der Kammer, die zu einer Deformierung der Isolierplatte führen könnte.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    die vereinfachte Schnittansicht eines Drehkolbenmotors mit erfindungsgemäßem Rotor,

Fig. 2    die vergrößerte Darstellung eines Teilbereiches der Fig. 1,

Fig. 3    die Ansicht entlang der Linie 3 - 3 der Fig. 2 und

Fig. 4    eine Teilansicht entlang der Linie 4 - 4 der Fig. 3.

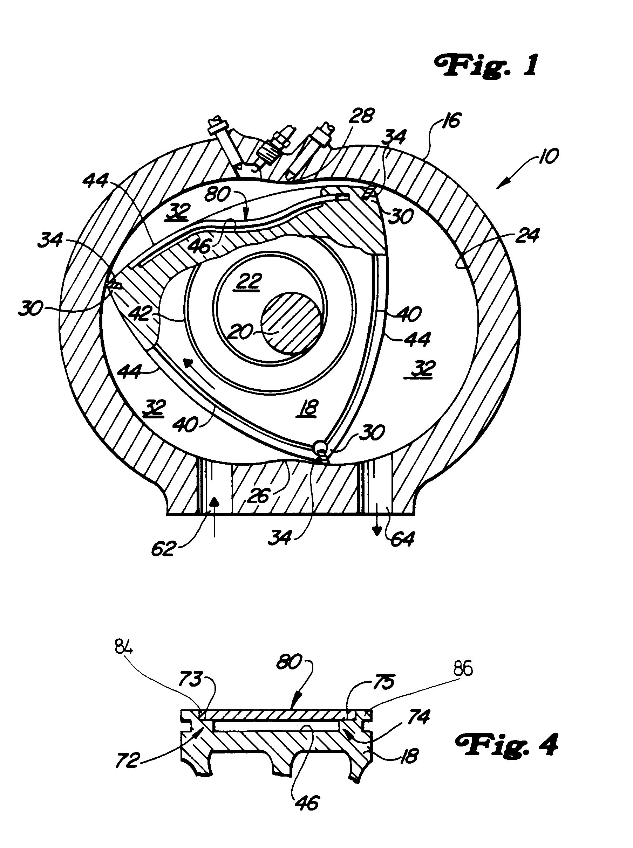

Der in Fig. 1 dargestellte Drehkolbenmotor, auch Drehkolbenverbrennungskraftmaschine genannt, hat grundsätzlich den gleichen Aufbau wie die in den eingangs genannten Patenten. Die Maschine 10 enthält ein äußeres Gehäuse, welches aus zwei nicht dargestellten axial zueinander beabstandeten Gehäuseendteilen und einem dazwischenliegenden Zwischen- oder Rotorgehäuse 16 besteht. Diese Gehäuseteile sind miteinander verbunden und schließen einen Maschinenhohlraum ein. In dem Maschinenhohlraum ist ein Rotor 18 drehbar auf dem Exzenterteil 20 einer Welle 22 gelagert.

Die Welle 22 erstreckt sich koaxial durch das Gehäuse 16 und ist in nicht gezeigten Lagerungen in den Gehäuseendteilen gelagert.

Die innere Umfangsfläche 24 des Zwischengehäuses 16 weist einen Querschnitt mit zwei Ausbuchtungen auf und stellt vorzugsweise im wesentlichen eine Trochoide dar. Die beiden Ausbuchtungen treffen sich an den Berührungspunkten oder -bereichen 26 und 28. Der Rotor 18 weist grundsätzlich einen dreieckigen Querschnitt mit Scheitelbereichen 30 auf, die in dichtendem Eingriff mit der Trochoidefläche 24 stehen und drei Arbeitsräume 32 zwischen dem Rotor 18 und den Gehäuseteilen bilden. Jeder der Scheitelbereiche 30 des Rotors 18 nimmt eine Dichtung 34 auf, die sich längs des Rotors 18 zwischen den inneren Wänden der beiden Gehäuseendteile erstreckt.

Der Rotor 18 enthält ferner an seinen Stirnseiten geeignete Dichtstreifen 40, die nahe der Umfangsfläche des Rotors 18 angeordnet sind und sich jeweils zwischen zwei benachbarten Scheitelbereichen 30 des Rotors 18 erstrecken. Die Dichtstreifen 40 dienen der Abdichtung der Kontaktfläche zwischen dem Rotor 18 und den Innenwandungen der Gehäuseendteile. Jede Stirnfläche des Rotors weist ferner eine geeignete Öldichtung 42 auf. Nicht dargestellte Federn drücken die Dichtungen 40 und 42 nach außen, so daß diese in Kontakt mit den Gehäuseendwandungen 12 und 14 treten. Jede der äußeren Angriffs- oder Arbeitsflächen 44 des Rotors 18 erstreckt sich zwischen benachbarten Scheitelbereichen 30 des Rotors 18 und hat vorzugsweise eine muldenförmige Ausnehmung 46.

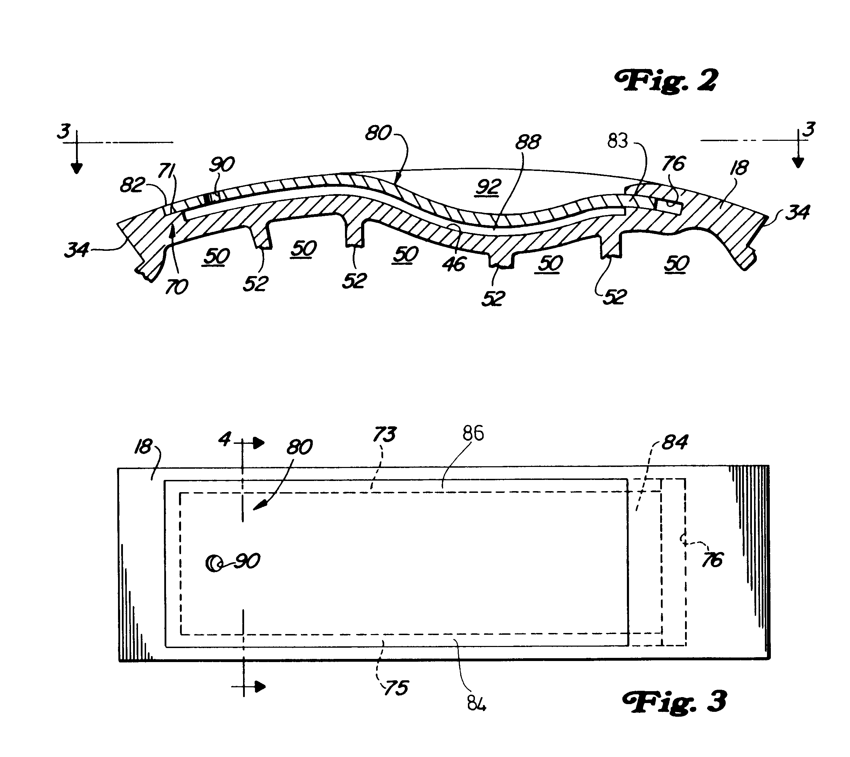

Wie es am besten aus Fig. 2 hervorgeht, ist das Innere des Rotors 18 vorzugsweise durch Zwischenwandungen 52 in in Umfangsrichtung beabstandete Kammern 50 unterteilt. Dies erleichtert die Kühlung des Rotors 18 durch Öl oder ein anderes Kühlmedium, das durch die Kammern 50 fließt, wie es beispielsweise durch die US-A-3,176,915 beschrieben wurde. Diese Ölkühlung des Rotors 18 dient dazu, Deformationen des Rotors 18 so klein wie möglich zu halten und die nicht gezeigten Rotorlager und die Rotordichtungen vor übermäßiger Erwärmung zu schützen.

Wie aus Fig. 1 hervorgeht, enthält das Maschinengehäuse 16 eine Lufteintrittsöffnung 62, die sich in der Nähe und auf einer Seite einer der Berührungsbereiche 26 der Trochoidefläche 24 befindet. Eine Abgasaustrittsöffnung 64 befindet sich auf der anderen Seite besagten Berührungsbereiches 26. Die Zündvorrichtung befindet sich in der Nähe des anderen Berührungsbereiches 28 der Trochoidefläche 24.

Gemäß der Figuren 2, 3 und 4 weist jede Ausnehmung 46 auf einem ersten Ende einen Endabsatz 70 auf, durch den eine radial nach außen weisende Auflage- oder Tragfläche 71 gebildet wird. Durch Seitenabsätze 72, 74 werden ähnliche Seitenauflageflächen 73 und 75 gebildet. An dem anderen zweiten Ende der Ausnehmung 46 mündet ein in den Rotormantel eingelassener Schlitz 76, der in etwa parallel zu der äußeren Umfangsfläche des Rotors 18 verläuft. Der Schlitz 76 erstreckt sich längs einer Richtung parallel zur Rotationsachse des Rotors 18.

Über jeder Ausnehmung 46 ist eine Isolierplatte 80 angeordnet. Das erste Ende 82 und die Seiten 84 und 86 der Platte 80 greifen an den Auflageflächen 71, 73 und 75 an und werden durch diese abgestützt. Das erste Ende 82 ist beispielsweise durch Schweißen am Rotor 18 befestigt, während die Seiten 84 und 86 lose auf den Auflageflächen 73 und 75 aufliegen können. Der Endabsatz 70 ist so dimensioniert, daß die äußere Fläche des ersten Endes 82 der Platte 80 sich stoßfrei, ohne einen Absatz zu bilden, an die benachbarte äußere Oberfläche des Rotors 18 anschließt. Das andere zweite Ende 83 der Platte 80 wird gleitbar in dem Schlitz 76 geführt.

Die Platte 80 weist einen im wesentlichen gleichmäßigen rechteckigen Querschnitt längs eines Axialschnittes des Rotors 18 auf, wie es aus Fig. 4 hervorgeht. Die Kontur der Platte 80 ist auf die Kontur der Bodenfläche der Ausnehmung 46 angepaßt, so daß die ganze Platte 80 beabstandet zur Bodenfläche der Ausnehmung 46 angeordnet ist. Die Platte 80, der Rotor 18 und die Bodenfläche der Ausnehmung 46 schließen somit eine Isolierkammer 88 ein.

Durch die Platte 80 erstreckt sich eine Druckausgleichsöffnung 90 und verbindet die Kammer 88 mit der Umgebung des Rotors 18, um einen Druckaufbau in der Isolierkammer 88 infolge eines Temperaturanstieges zu vermeiden. Da ein Druckausgleich über die Druckausgleichsöffnungen 90 möglich ist, und da sich die Platte 80 bei Temperaturänderungen wegen des frei in dem Schlitz 74 gelagerten zweiten Plattenendes 83 frei ausdehnen oder zusammenziehen kann, lassen sich Druckbeanspruchungen in der Platte 80 vermeiden oder reduzieren.

Wahlweise können einige wenige, nicht gezeigte schmale Stützen zwischen der Platte 80 und der Bodenfläche der Ausnehmung 46 angeordnet sein, um eine Durchfederung der Platte 80 nach unten aufgrund von Biegespannungen zu begrenzen und um zu verhindern, daß die Platte 80 die Bodenfläche berührt und Wärme an diese ableitet. Derartige Stützen sollten in Größe und Anzahl begrenzt sein, um den Wärmeübergang klein zu halten.

Schließlich sind sowohl die Bodenfläche der Ausnehmung 46 als auch die Platte 80 so profiliert, daß sie eine Verbrennungstasche 92 bilden. Da die Platte 80 von dem kühleren Rotor 18 isoliert ist, erreicht diese höhere Betriebstemperaturen. Hierdurch wird die Bildung von dicken Kohlenstoffablagerungen auf der Rotoroberfläche sowie die Erzeugung von Qualm und die Menge der Kohlenwasserstoffe in dem Maschinenauspuffgas vermindert.

Auch wenn die Erfindung lediglich an Hand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1. Rotor (18) für einen Drehkolbenmotor (10) mit mehreren auf dem Umfang verteilten und zueinander beabstandeten Scheitelbereichen (30) und mit mehreren zwischen benachbarten Scheitelbereichen (30) liegenden Arbeitsflächen (44), wobei jede Arbeitsfläche (44) eine Ausnehmung (46) aufweist, die wenigstens teilweise durch eine Isolierplatte (80) abgedeckt ist, dadurch gekennzeichnet, daß die Isolierplatte (80) einen im wesentlichen gleichförmigen rechteckigen Querschnitt aufweist und daß ein erstes Ende (82) der Isolierplatte (80) fest mit dem Rotor (18) verbunden ist, während ein zweites Ende (83) der Isolierplatte (80) gleitbar von einem Schlitz (76) im Rotor (18) aufgenommen wird.

2. Rotor nach Anspruch 1, dadurch gekennzeichent, daß der Schlitz (76) sich in eine Richtung parallel zur Rotorachse erstreckt.

3. Rotor nach Anspruch 1 oder 2, dadurch gekennzeichent, daß der Schlitz (76) im Rotor (18) im wesentlichen parallel zur äußeren Umfangsfläche des Rotors (18) ausgerichtet ist, entlang eines zweiten Endes der Ausnehmung (46) verläuft und in die Ausnehmung (46) mündet.

4. Rotor nach einem der Ansprüche 1 bis 3, dadurch gekennzeichent, daß die Ausnehmung (46) wenigstens eine Absatzfläche (71) aufweist, die sich wenigstens teilweise entlang des ersten Endes (82) der Isolierplatte (80) erstreckt und auf der das erst Ende (82) der Isolierplatte (80) aufliegt und befestigt ist.

5. Rotor nach einem der Ansprüche 1 bis 4, dadurch gekennzeichnet, daß die Befestigung des ersten Endes (82) der Isolierplatte (80) als Schweißverbindung ausgebildet ist.

6. Rotor nach einem der Ansprüche 1 bis 5, dadurch gekennzeichent, daß die Randbereiche (84, 86) der Isolierplatte (80) Wenigstens teilweise auf in die Ausnehmung (46) eingelassenen Absatzflächen (73, 75) aufliegen.

7. Rotor nach einem der Ansprüche 4 bis 6, dadurch gekennzeichent, daß die Isolierplatte (80) sich auf den Absatzflächen (71, 73, 75) und auf einer Fläche des Schlitzes (76) derart abstützt, daß der mittlere Bereich der Isolierplatte (80) zu der Bodenfläche der Ausnehmung (46) beabstandet ist.

8. Rotor nach einem der Ansprüche 1 bis 7, dadurch gekennzeichent, daß die Isolierplatte (80) wenigstens eine Druckausgleichsöffnung (90) aufweist, die eine unterhalb der Isolierplatte (80) liegende Isolierkammer (88) mit dem außerhalb des Rotors (18) liegenden Raum verbindet.

9. Rotor nach einem der Ansprüche 1 bis 8, dadurch gekennzeichent, daß sowohl die Isolierplatte (80) als auch die Ausnehmung (46) im Rotor (18) so geformt sind, daß sich auf der wirksamen Rotorumfangsfläche eine dem Verbrennungsgas ausgesetzte Verbrennungstasche (92) ausbildet.

*Fig. 1*

*Fig. 4*

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 080 934 (JONES)<br>* Spalte 4, Zeile 8 - Spalte 6, Zeile 8; Abbildungen *<br>– – – | 1 | F 01 C 21/08<br>F 02 B 55/02 |
| D,A | US-A-3 995 602 (BURLEY)<br>* Spalte 3, Zeile 36 - Spalte 4, Zeile 35; Abbildungen *<br>– – – | 1 | |
| D,A | US-A-4 067 670 (GOLOFF)<br>* Zusammenfassung; Abbildungen *<br>– – – – – | 1 | |

| | RECHERCHIERTE SACHGEBIETE (Int. Cl.5) |
|---|---|
| | F 01 C<br>F 02 B |

Der vorliegende Recherchenbericht wurde für alle Patentansprüche erstellt

| Recherchenort | Abschlußdatum der Recherche | Prüfer |
|---|---|---|
| The Hague | 15 October 91 | MOUTON J.M.M.P. |